# EUROPÄISCHE PATENTSCHRIFT

(11) **EP 1 749 061 B1**
(45) Veröffentlichungstag und Bekanntmachung des Hinweises auf die Patenterteilung: **11.06.2008**
(21) Anmeldenummer: 05744813.6
(22) Anmeldetag: 26.04.2005
(51) Int. Cl.: C08L 25/08, C08L 23/12, C08L 31/04, B60K 37/00

(54) **SCHALLISOLIERENDES BAUTEIL AUS HOCHGEFÜLLTEM THERMOPLASTISCHEN ELASTOMER AUF BASIS VON STYROL**
SOUNDPROOFING COMPONENT CONSISTING OF A STYRENE-BASED, HEAVILY FILLED THERMOPLASTIC ELASTOMER
ELEMENT INSONORISANT EN ELASTOMERE THERMOPLASTIQUE A HAUTE CHARGE A BASE DE STYRENE

(30) Priorität: 19.05.2004 DE 202004008165 U
(43) Veröffentlichungstag der Anmeldung: 07.02.2007
(73) Patentinhaber: Carcoustics TechConsult GmbH, 51381 Leverkusen (DE)
(72) Erfinder: ZYBARTH, Marion, 42929 Wermelskirchen (DE)
(74) Vertreter: Cohausz & Florack
(86) Internationale Anmeldenummer: PCT/EP2005/004455
(87) Internationale Veröffentlichungsnummer: WO 2005/116133

(56) Entgegenhaltungen:
- EP-A- 0 273 228
- EP-A- 0 926 195
- US-A- 5 869 591
- US-B1- 6 184 294

## Beschreibung

Die Erfindung betrifft ein schallisolierendes Bauteil für Kraftfahrzeuge, insbesondere in Form einer Getriebetunnel- und/oder Stirnwandverkleidung, das aus mindestens einem Kunststoffformteil aus gefülltem thermoplastischen Elastomer auf Basis von Styrol oder Butadien-Styrol gebildet ist.

Die DE 34 48 259 C2 offenbart ein Fahrzeuginnenteil aus Kunststoff, beinhaltend Polyolefin und/oder Polystyrol, Synthesekautschuk und Füllstoff. Der zur Herstellung dieses Fahrzeuginnenteils verwendete Kunststoff ist eine innige Mischung aus 25 bis 40 Gew.-% eines Polyolefins und/oder Polystyrols mit hoher Schlagfestigkeit, 25 bis 40 Gew.-% eines Synthesekautschuks, 25 bis 40 Gew.-% eines amorphen Füllstoffs sowie gegebenenfalls zusätzlich, bezogen auf 100 Gew.-% der obigen Bestandteile, 6,8 bis 10,0 Gew.-% üblichen Zusätzen. Bei den Zusätzen handelt es sich um bis zu 1,0 Gew.-% Färbemittel und bis zu 7,0 Gew.-% Verarbeitungsöl, insbesondere naphthenisches Verarbeitungsöl. Die Mischung ist dabei so eingestellt, dass der verwendete Kunststoff zähelastisch ist mit einem dynamischen Elastizitätsmodul von 10⁷ bis 10¹⁰ N/m² und einem Verlustfaktor von mindestens 0,05. Dieses bekannte Fahrzeuginnenteil soll insbesondere als Armaturentafel, Türverkleidung oder als Radlaufteil ausgebildet werden.

Die US-A-5,869,591 offenbart duroplastische Elastomere, thermoplastische Vulkanisate sowie daraus hergestellte Produkte, insbesondere Kraftfahrzeugteile wie Tür-, Kofferraum- und Motorhaubenabdichtungen. Die duroplastischen Elastomere enthalten ein vernetztes Mischpolymerisat aus
(a) 15 bis 70 Gew.-% Polymereinheiten, die von mindestens einem alpha-Olefin (z.B. Ethylen, Polypropylen, EVA-Copolymer) abstammen,
(b) 30 bis 70 Gew.-% Polymereinheiten, die von mindestens einem Vinyliden-Aromaten (z.B. Styrol) abstammen, und
(c) 0 bis 15 Gew.-% Polymereinheiten, die von mindestens einem Dien (z.B. Butadien) abstammen.

Die thermoplastischen Vulkanisate sind aus den duroplastischen Elastomeren und thermoplastischen Polyolefinen zusammengesetzt. Füllstoffe können bis zu einer Menge von 90 Gew.-%, bezogen auf das Gewicht der Mischung, zugesetzt sein.

Die US-A-6,184,294 offenbart Formteile, die eine thermoplastische Mischung aus
(A) 1 bis 99 Gew.-% eines Mischpolymerisats aus Styroleinheiten und einer Kombination aus Ethylen- und C3-8-alpha-Olefineinheiten (z.B. Butylen) und
(B) 99 bis 1 Gew.-% eines Polymers aus alpha-Olefineinheiten (z.B. Polypropylen-Homopolymer, EVA-Copolymer) enthalten.

Füllstoffe können bis zu 90 Gew.-%, bezogen auf die gesamte Mischung, zugesetzt sein. Daraus hergestellte Schaumformteile wurden auf ihre akustischen Dämpfungseigenschaften getestet. Hinsichtlich der Temperaturbeständigkeit dieser Schaumformteilen, insbesondere ob sie für Anwendungen im motornahen Bereich von Kraftfahrzeugen geeignet sind, enthält die US-A-6,184,294 keine konkreten Angaben.

Der vorliegenden Erfindung liegt die Aufgabe zugrunde, ein Bauteil der eingangs genannten Art anzugeben, das eine relativ hohe Temperaturbeständigkeit aufweist und bei kostengünstiger Herstellbarkeit eine hohe Schalldämmung sowie eine Integration von Zusatzfunktionen ermöglicht.

Diese Aufgabe wird durch ein Bauteil mit den Merkmalen des Anspruchs 1 gelöst. Das erfindungsgemäße Bauteil ist im wesentlichen **dadurch gekennzeichnet,** dass der zur Herstellung verwendete Kunststoff eine Mischung aus 5 bis 15 Gew.-% eines Copolymers auf Basis von Butadien-Styrol, eines Copolymers auf Basis von gebundenem Styrol und Ethylen-Butylen oder eines Copolymers auf Basis von gebundenem Styrol und Ethylen-Butylen in Kombination mit einem Block-Copolymer auf Basis von gebundenem Styrol und Butadien, 2 bis 15 Gew.-% eines Polypropylen-Homopolymers und/oder eines Vinyl-Acetat-Copolymers, mindestens 60 Gew.-% eines Füllstoffs, wobei der Kunststoff mindestens 30 Gew.-% Magnetit als Füllstoff beinhaltet, und bis zu 23 Gew.-% Additiven ist.

Das erfindungsgemäße Bauteil lässt sich kostengünstig insbesondere im Spritzgieß-, Spritzpräge- oder Strangablegeverfahren herstellen. Es zeichnet sich durch einen besonders hohen Füllstoffanteil aus, wobei die Materialkosten für den Füllstoff erheblich geringer sind als die Materialkosten für das bzw. die verwendeten Polymere. Erfindungsgemäße Bauteile lassen sich grundsätzlich abfallfrei und in relativ kurzen Zykluszeiten herstellen. Die Zykluszeit kann dabei durch die Auswahl und Bemessung des Füllstoffs minimiert werden. Es lassen sich Zyklus- bzw. Verarbeitungszeiten von unter 20 Sekunden für Bauteile mit einer Grundfläche von ca. 1,5 m² je nach Komplexität der Bauteilstruktur realisieren. Die verwendeten Polymere verleihen dem erfindungsgemäßen Bauteil eine relativ hohe Temperaturbeständigkeit, wobei die Gebrauchstemperatur dauerhaft bis etwa 100°C und kurzzeitig etwa 120°C bis 140°C betragen darf. Das Spritzgießen sowie das Spritzprägen ermöglichen die Herstellung von Bauteilen mit hoher Passgenauigkeit in Bezug auf die Kontur angrenzender Fahrzeugteile und die Integration von Zusatzfunktionen, beispielsweise durch das einstückige Anformen von Dichtlippen, Kabelhaltern, Kabelführungen und/oder abdichtenden Tüllen zur Durchleitung von Kabeln, Leitungen oder Wellen. Über die Wahl des Füllstoffs und dessen Mengenanteil können insbesondere auch die Schalldämmeigenschaften des erfindungsgemäßen Bauteils optimiert werden. Durch die Art und den Mengenanteil des Füllstoffs lassen sich zudem das Schrumpfverhalten der hergestellten Bauteile minimieren, was günstig hinsichtlich der Passgenauigkeit und der abdichtenden bzw. schalldämmenden Wirkung der erfindungsgemäßen Bauteile ist.

Der verwendete Magnetit besitzt vorzugsweise eine mittlere Korngröße von etwa 10 µm. Magnetit (Fe₃O₄) ist ein umweltverträgliches, natürliches Eisenoxid-Mineral, das erfindungsgemäßen Bauteilen eine relativ hohe Dichte und damit gute Schalldämmeigenschaften verleiht. Ferner ergibt sich aufgrund der relativ hohen Wärmeleitfähigkeit von Magnetit eine hinsichtlich der Wärmebeständigkeit des Bauteils günstige Temperaturvergleichmäßigung im Bauteil. Zudem weist die zur Herstellung der Bauteile verwendete Kunststoffmischung bei der Zumischung von Magnetit ein günstiges Fließverhalten für das Spritzgießen bzw. Spritzprägen auf. Magnetit lässt sich mit den übrigen Bestandteilen des verwendeten Kunststoffs sehr homogen mischen und ohne nennenswerte Entmischung verarbeiten.

Das erfindungsgemäße Bauteil kann neben Magnetit auch gemahlenes Calciumcarbonat in Form einer sehr weichen, feinteiligen Kreide, gemahlenes, natürliches Bariumsulfat und/oder gefälltes Bariumsulfat als Füllstoff enthalten. Durch den Zusatz spezieller Füllstoffe wie z.B. Muskovit-Glimmer, Phlogopit-Glimmer, expandiertem Graphit und/oder fibrilierter Zellulosefasern lässt sich die körperschalldämpfende Wirkung des erfindungsgemäßen Bauteils verbessern.

Durch den Einsatz relativ leichter Füllstoffe, wie z.B. Hohlglasteilchen, Keramikhohlteilchen, Blähtonteilchen und/oder Glasfasern lassen sich Materialkosten des erfindungsgemäßen Bauteils verringern. Zudem sind Glasfasern hinsichtlich der Festigkeit des Bauteils und Hohlglasteilchen, Keramikhohlteilchen und/oder Blähtonteilchen darüber hinaus auch hinsichtlich der Schallisolierung von Vorteil. Insbesondere lässt sich durch derartige Hohlteilchen bzw. porösen Füllstoff eine Gewichtsverringerung am erfindungsgemäßen Bauteil erzielen.

In einer weiteren vorteilhaften Ausgestaltung des erfindungsgemäßen Bauteils ist vorgesehen, dass der zu seiner Herstellung verwendete Kunststoff bis zu 0,5 Gew.-% eines Epoxidharzes beinhaltet. Die Epoxidharzverbindungen bewirken eine verbesserte Einbindung der Füllstoffe in die Polymermatrix.

Eine weitere vorteilhafte Ausgestaltung des erfindungsgemäßen Bauteils ist **dadurch gekennzeichnet,** dass der Anteil des Polypropylen-Homopolymers an dem zur Herstellung des Bauteils verwendeten Kunststoff 2 bis 8 Gew.-% beträgt. Es handelt sich dabei vorzugsweise um ein speziell leicht fließendes Polypropylen-Homopolymer für lange Fließwege mit enger Molekulargewichtsverteilung. Polypropylen-Homopolymer ist ein relativ preisgünstiges polyolefinisches Basispolymer. Polypropylen-Homopolymere erhöhen die Festigkeit und Steifigkeit des Bauteils.

Nach einer weiteren Ausgestaltung der Erfindung ist vorgesehen, dass der Anteil des Vinyl-Acetat-Copolymers an dem zur Herstellung des Bauteils verwendeten Kunststoff bis zu 12 Gew.-% beträgt, vorzugsweise im anteiligen Austausch zum Polypropylen-Homopolymer. Mit zunehmendem Gehalt an Vinyl-Acetat-Copolymer wird der Kunststoff weicher, weil die Kristallinität abnimmt. Die so hergestellten Bauteile sind flexibler, zäher, leichter schweißbar und weniger anfällig gegen Spannungsrissbildung.

In einer weiteren bevorzugten Ausgestaltung des erfindungsgemäßen Bauteils ist vorgesehen, dass der zu seiner Herstellung verwendete Kunststoff 8 bis 20 Gew.-% Verarbeitungsöl, vorzugsweise Weißöl enthält. Das Verarbeitungsöl bzw. Weißöl fungiert in der verwendeten Kunststoffmischung als Weichmacher der Polymere. Bei dem zugegebenen Weißöl handelt es sich um ein medizinisches oder technisches Weißöl mit sehr geringen Anteilen an aromatischen Kohlenwasserstoffen, insbesondere um ein naphthenisches Öl. Ein möglichst geringer Aromatenanteil ist nicht nur aus Gründen des Gesundheits- und Umweltschutzes zu bevorzugen. Ein möglichst geringer Aromatenanteil ist auch hinsichtlich der mechanischen Eigenschaften vorzuziehen, da Aromaten die mechanischen Eigenschaften von styrolhaltigen TPEs negativ beeinflussen. Die zur Herstellung des erfindungsgemäßen Bauteils eingesetzten Weißöle besitzen einen Anteil an aromatischen Kohlenwasserstoffen von vorzugsweise weniger als 1 Gew.-% (bezogen auf 100 Gew.-% Weißöl) und eine kinematische Viskosität von mindestens 8 mm²/s bei einer Temperatur von etwa 100°C.

Das aus thermoplastischem Elastomer auf Basis von Styrol (TPE-S) hergestellte ungeschäumte Kunststoffformteil des erfindungsgemäßen Bauteils kann in weiterer Ausgestaltung der Erfindung mit Schallabsorptionsmaterialien, wie z.B. Polyurethan-Kaltschaum, Melaminharzschaumstoff, Polyurethanschaum-Prägeteilen, Schnittschaummaterial und/oder Vliesstoff aus thermoplastischen Fasern und/oder Naturfasern kombiniert werden.

Die Verbindung des aus TPE-S hergestellten Kunststoffformteils mit diesem Schallabsorptionsmaterial erfolgt vorzugsweise an partiellen Verbindungsstellen, also nicht durch eine großflächige stoffschlüssige Verbindung. Dies hat den Vorteil, dass sich die Schallabsorptionsmaterialien bei einem Recycling des erfindungsgemäßen Bauteils weitestgehend sortenrein von dem aus TPE-S hergestellten Kunststoffformteil trennen lassen. Des weiteren wird die Schallabsorptionseigenschaft verbessert.

Die Verbindung kann insbesondere durch Verklipsen, partielles Verkeilen, partielles Verschweißen oder durch an dem Kunststoffformteil einstückig angeformte Dome realisiert werden, wobei das Schallabsorptionsmaterial mit den Domen korrespondierende Durchbrüche aufweist und die Spitzen der Dome schließlich mittels Ultraschallumformung in Nietköpfe umgeformt werden können.

Nach einer weiteren vorteilhaften Ausgestaltung der Erfindung ist vorgesehen, dass an dem Kunststoffformteil mindestens ein Versteifungselement und/oder Fixierelement zur Fixierung eines Kabels oder einer Leitung, oder mindestens eine Abstandsrippe und/oder eine Kabel- oder Leitungsführung einstückig angeformt sind. Das Versteifungselement, Fixierelement, die Abstandsrippe oder die Kabel- oder Leitungsführung kann dabei gegebenenfalls auch aus einem härteren Kunststoff gebildet sein als das übrige Kunststoffformteil oder auch in segmentierter Form des Kunststoffformteils ausgebildet sein. Die Versteifungsfunktion kann erfindungsgemäß insbesondere durch eine konstruktive Rippengestaltung auch aus dem Grundwerkstoff realisiert sein.

Weitere bevorzugte und vorteilhafte Ausgestaltungen der Erfindung sind in den Unteransprüchen **gekennzeichnet.** Nachfolgend wird die Erfindung anhand einer mehrere Ausführungsbeispiele darstellenden Zeichnung näher erläutert. Es zeigen:
- Fig. 1: eine perspektivische Ansicht eines erfindungsgemäßen Bauteils in Form einer Kraftfahrzeug-Stirnwandverkleidung;
- Fig. 2: eine Draufsicht einer weiteren Kraftfahrzeug-Stirnwandverkleidung, die der in Fig. 1 gezeigten ähnelt;
- Fig. 3: eine Querschnittansicht einer weiteren Kraftfahrzeug-Stirnwandverkleidung mit einer daran partiell befestigten Schallabsorberlage;
- Fig. 4: eine perspektivische Ansicht einer der Befestigung einer Schallabsorberlage dienenden Ausprägung eines aus thermoplastischem Elastomer auf Basis von Styrol hergestellten Kunststoffformteils in vergrößerter Detaildarstellung ohne Schallabsorberlage;
- Fig. 5: eine perspektivische Ansicht eines Abschnitts eines erfindungsgemäßen Kunststoffformteils mit angeformten Fixierelementen zur Befestigung eines Kabels oder einer Schlauchleitung sowie mit einem als Abstützung für Kabel oder Schlauchleitungen dienenden balkenförmigen Auskragung;
- Fig. 6: verschiedene Ansichten eines an einem erfindungsgemäßen Kunststoffformteil angeformten Fixierelements zur Befestigung eines Kabels oder einer Schlauchleitung;
- Fig. 7: verschiedene Ansichten eines Fixierelements zur Befestigung eines Kabels oder einer Schlauchleitung, das in eine hinterschnittene Nut eines erfindungsgemäßen Kunststoffformteils formschlüssig einsetzbar ist;
- Fig. 8: eine Querschnittansicht einer tüllenförmig ausgebildeten, abdichtenden Kabel- oder Leitungsdurchführung;
- Fig. 9: eine Draufsicht auf die Kabel- bzw. Leitungsdurchführung gemäß Fig. 8;
- Fig. 10: eine Schnittansicht des Randbereichs eines erfindungsgemäßen Bauteils mit einer daran ausgebildeten Dichtlippe;
- Fig. 11: eine Querschnittansicht einer an dem erfindungsgemäßen Kunststoffformteil einstückig ausgebildeten, federbalgartigen Kabel- oder Leitungsdurchführung;
- Fig. 12: eine Querschnittansicht eines Abschnitts eines erfindungsgemäßen Kunststoffformteils mit angeschäumter Schallabsorberlage und lösbarem Befestigungselement;
- Fig. 13: eine schematische Querschnittansicht eines erfindungsgemäßen Bauteils in Form einer Kraftfahrzeug-Getriebetunnelabdeckung;
- Fig. 14: eine vergrößerte Detaildarstellung des Randbereichs A gemäß Fig. 13;
- Fig. 15: eine perspektivische Ansicht einer erfindungsgemäßen Kraftfahrzeug-Getriebetunnelabdeckung;
- Fig. 16: eine Querschnittansicht eines Abschnitts eines erfindungsgemäßen Bauteils in einer Zwei-Komponenten-Ausführungsform;
- Fig. 17: eine Querschnittansicht eines Abschnitts eines erfindungsgemäßen Bauteils in einer weiteren Mehr-Komponenten-Ausführungsform;
- Fig. 18: eine Querschnittansicht eines Abschnitts eines erfindungsgemäßen Bauteils in einer weiteren Zwei-Komponenten-Ausführungsform; und
- Fig. 19: eine Querschnittansicht eines Abschnitts eines erfindungsgemäßen Bauteils mit Abstandsrippen und einer Schallabsorberlage.

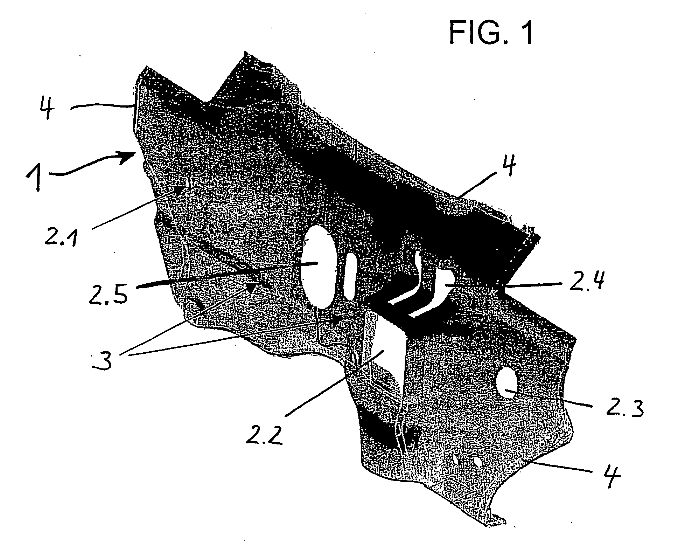

Fig. 1 zeigt eine schallisolierende Stirnwandverkleidung für ein Kraftfahrzeug. Die dargestellte Stirnwandverkleidung ist zur Verkleidung der Innenseite, d.h. der dem Fahrgastraum zugewandten Seite einer Karosserie-Stirnwand bestimmt und besteht aus einem Formteil 1, das aus einem hochgefüllten thermoplastischen Elastomer auf Basis von Styrol vorzugsweise durch Spritzgießen oder Spritzprägen hergestellt ist. Das Formteil 1 ist den geometrischen Abmessungen am Einbauort, insbesondere der Kontur der Stirnwand so genau wie erforderlich angepasst. Es weist mehrere Durchbrüche 2.1 bis 2.5 auf, die der Anordnung bzw. Aufnahme von Fahrzeugaggregaten dienen, wie z.B. einer Lenkstange, Pedalteilen, Kabeln, Schlauchleitungen und Klimaanlagenteilen. Die Durchbrüche 2.1 bis 2.5 sind so klein wie möglich ausgebildet, um in akustischer Hinsicht eine hohe Abdichtungswirkung und eine verbesserte Gesamtdämmung des Systems zu erzielen. An den Durchbrüchen sind vorzugsweise Dichtlippen ausgebildet. Die Dichtlippen können montageunterstützend ausgestaltet und gegebenenfalls mit abdichtender Überdeckung zu dem durch den jeweiligen Durchbruch hindurchgeführten Aggregat ausgebildet sein.

Der zur Herstellung des Formteils 1 verwendete Kunststoff ist eine Mischung aus 5 bis 15 Gew.-% eines Copolymers auf Basis von gebundenem Styrol und Ethylen-Butylen und/oder eines Copolymers auf Basis von gebundenem Styrol und Ethylen-Butylen in Kombination mit einem Block-Copolymer auf Basis von gebundenem Styrol und Butadien, 2 bis 15 Gew.-% eines Polypropylen-Homopolymers und/oder eines Vinyl-Acetat-Copolymers, mindestens 60 Gew.-% eines Füllstoffs, 8 bis 20 Gew.-% eines medizinischen oder technischen Weißöls, und bis zu 3 Gew.-% üblichen Additiven. Der Füllstoffgehalt beträgt vorzugsweise mindestens 70 Gew.%. Die Materialdichte liegt im Bereich von 1,5 bis 2,5 g/cm³, insbesondere im Bereich von 1,8 bis 2,2 g/cm³.

Sofern der Kunststoff 5 bis 15 Gew.-% eines Copolymers auf Basis von gebundenem Styrol und Ethylen-Butylen beinhaltet, so liegt der Anteil des gebundenen Styrols an dem Copolymer vorzugsweise im Bereich von 30 und 34 %.

Bei der alternativen Variante, bei welcher der Kunststoff in Ergänzung zu 3 bis 12 Gew.-% eines Copolymers auf Basis von gebundenem Styrol und Ethylen-Butylen zwischen 2 bis 10 Gew.-% eines Block-Copolymers auf Basis von gebundenem Styrol und Butadien beinhaltet, liegen die Anteile des Styrols an den Polymeren vorzugsweise jeweils im Bereich von 30 und 32 %.

Eine bevorzugte Mischung des für die Herstellung des Formteils verwendeten Kunststoffs ist **dadurch gekennzeichnet,** dass der Anteil des Polypropylen-Homopolymers 2 bis 8 Gew.-% beträgt. Alternativ oder ergänzend kann die Mischung bis zu 12 Gew.-% Vinyl-Acetat-Copolymer aufweisen.

Der Kunststoff enthält insbesondere Magnetit (Fe₃O₄). Magnetit verleiht dem Kunststoff hervorragende Schalldämmeigenschaften und eine verbesserte Wärmebeständigkeit. Der Magnetitanteil am Kunststoff beträgt mindestens 30 Gew.-%, insbesondere mindestens 35 Gew.-%, beispielsweise etwa 40 Gew.-%. Der verwendete Magnetit besitzt eine mittlere Korngröße von vorzugsweise etwa 10 µm. Außer Magnetit beinhaltet der Kunststoff des erfindungsgemäßen Formteils zusätzlich gemahlenes Calciumcarbonat, gemahlenes, natürliches Bariumsulfat und/oder gefälltes Bariumsulfat. Der Calciumcarbonat- und/oder Bariumsulfatanteil am Kunststoff beträgt vorzugsweise mindestens 25 Gew.%. Das zugegebene Calciumcarbonat ist sehr feinteilig mit relativ gleichmäßiger Granulometrie (Siebrückstand z.B. 28 µm kleiner 0,2 %) und geringem Feuchtigkeitsgehalt. Als Bariumsulfat wird vorzugsweise sehr feinteiliges, geruchsneutrales Mahlspat in Compounds verwendet.

Ferner kann der verwendete Kunststoff je nach Einsatzzweck des daraus hergestellten erfindungsgemäßen Bauteils Hohlglasteilchen, Keramikteilchen, Blähtonteilchen und/oder Glasfasern als Füllstoff enthalten. Hinsichtlich der Erzielung sehr guter körperschalldämpfender Eigenschaften ist auch der Zusatz von Muskovit-Glimmer, Phlogopit-Glimmer, expandierten Graphit und/oder fibrilierte Zellulosefasern als Füllstoff vorteilhaft. Eine weitere bevorzugte Ausgestaltung der Erfindung besteht darin, dass der Kunststoff bis zu 0,3 Gew.-%, insbesondere bis zu 0,5 Gew.-% eines Epoxidharzes beinhaltet. Das Epoxidharz dient der "Eingliederung bzw. Vernetzung" der Füllstoffe mit der Polymermatrix.

Geeignete Kunststoffmischungen zur Herstellung erfindungsgemäßer Bauteile, insbesondere von Stimwandverkleidungen mit hervorragenden mechanisch physikalischen sowie schallisolierenden Eigenschaften sind beispielsweise wie folgt zusammengesetzt:

### Beispiel 1

| | |
|---|---|
| 8,10 Gew.-% | Thermoplastisches Copolymer auf Basis von Butadien-Styrol |
| 14,58 Gew.-% | medizinisches oder technisches Weißöl |
| 4,05 Gew.-% | Polypropylen-Homopolymer |
| 32,40 Gew.-% | feinteiliges Calciumcarbonat |
| 0,24 Gew.-% | Epoxidharz |
| 0,08 Gew.-% | Fettsäureamid als Gleit-, Slip- und Fließverbesserer |
| 0,02 Gew.-% | Antioxidantien |
| 0,02 Gew.-% | Stabilisatoren zur Verbesserung der UV- und/oder Temperaturbeständigkeit |
| 40,51 Gew.-% | Magnetit (mittlere Korngröße um 10 µm) |

### Beispiel 2

| | |
|---|---|
| 9,10 Gew.-% | Thermoplastisches Copolymer auf Basis von Styrol und Ethylen-Butylen |
| 12,50 Gew.-% | medizinisches oder technisches Weißöl |
| 2,14 Gew.-% | Polypropylen-Homopolymer |
| 1,80 Gew.-% | Vinyl-Acetat-Copolymer |
| 31,20 Gew.-% | feinteiliges Calciumcarbonat |
| 0,24 Gew.-% | Epoxidharz |
| 0,08 Gew.-% | Fettsäureamid |
| 0,02 Gew.-% | Antioxidantien |
| 0,02 Gew.-% | Stabilisatoren zur Verbesserung der UV- und/oder Temperaturbeständigkeit |
| 42,90 Gew.-% | Magnetit (mittlere Korngröße um 10 µm) |

Die erfindungsgemäßen Kunststoffmischungen lassen sich auch in Extrudiervorrichtungen weiterverarbeiten, wobei die extrudierten Bahnen bzw. Zuschnitte anschließend durch Tiefziehen umgeformt werden können. Vorzugsweise werden aus den erfindungsgemäßen Kunststoffmischungen durch Urformen, insbesondere auch durch Niederdruck-Spritzgießen oder Spritzpressen, ungeschäumte Formteile hergestellt.

Das Kunststoffformteil 1 der in Fig. 1 dargestellten Stirnwandverkleidung weist Bereiche 3 unterschiedlicher Wanddicke und/oder Materialdichte auf. Die Wanddicke bzw. Materialdichte ist insbesondere in Abhängigkeit der örtlichen Schallintensitätsverteilung gewählt. Aus der unterschiedlichen Wanddicke bzw. Materialdichte resultiert ein örtlich unterschiedliches Flächengewicht.

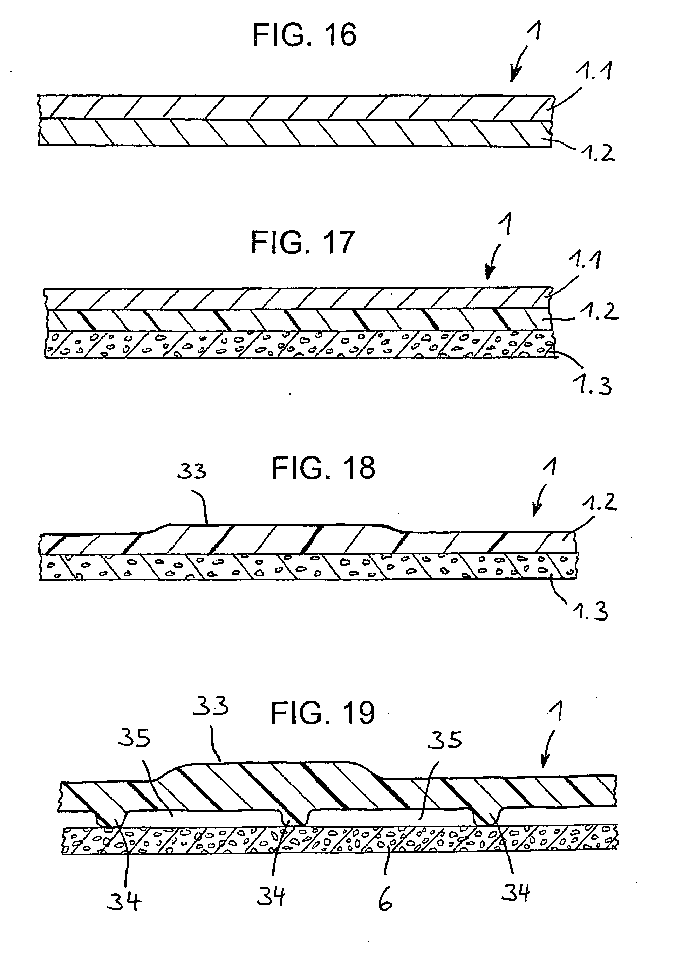

An der dem Schall zugewandten Seite ist das Kunststoffformteil 1 ganzflächig oder partiell mit einem Schallabsorbermaterial, beispielsweise mit einem Vliesstoff und/oder einem offenporigen Schaumstoff bedeckt. Das Kunststoffformteil und das Schallabsorbermaterial bilden zumindest bereichsweise ein akustisches FederMasse-System, wobei das Schallabsorbermaterial als Feder und das Kunststoffformteil als Masse bzw. Schwerschicht wirkt. Zur Optimierung der schalldämpfenden Wirkung ist die Wanddicke bzw. Materialdichte des Kunststoffformteils auch in Abhängigkeit der Dicke bzw. Federsteifigkeit des Schallabsorbermaterials abgestimmt und somit örtlich unterschiedlich ausgebildet (vgl. hierzu auch Figuren 18 und 19).

Der Außenrand des in Fig. 1 gezeigten ungeschäumten Kunststoffformteils ist als dünnauslaufende, elastische Dichtlippe 4 ausgebildet. Hierdurch wird eine abdichtende Anlage des Kunststoffformteils 1 an angrenzende Bauteile, z.B. an die A-Säulen der Fahrzeugkarosserie erreicht.

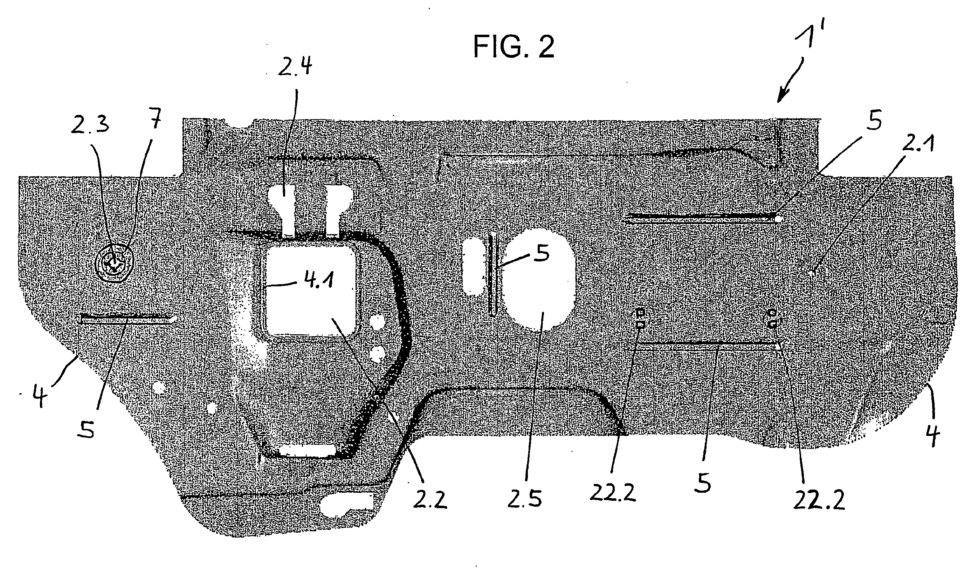

Fig. 2 zeigt ein weiteres als Stirnwandverkleidung dienendes Kunststoffformteil 1', das dem in Fig. 1 dargestellten Kunststoffformteil ähnelt und ebenfalls aus einer entsprechenden Kunststoffmischung hergestellt ist. Das Kunststoffformteil 1' besitzt eine gewisse Biegesteifigkeit, zu der insbesondere seine dreidimensionale Formgebung beiträgt. Andererseits wird seine Biegesteifigkeit durch seine Durchbrüche vermindert. Um eine einfache Handhabung bei der Montage zu ermöglichen, sind an dem Kunststoffformteil mehrere rippen- bzw. sickenförmige Versteifungselemente 5 einstückig angeformt. Die Biegesteifigkeit des Kunststoffformteils 1' wird durch diese Versteifungselemente 5 örtlich verbessert. Gleichwohl besitzt das Kunststoffformteil 1' eine ausreichende Flexibilität, wobei insbesondere an seinem Rand eine dünnauslaufende, elastisch wirkende Dichtlippe 4 einstückig ausgebildet ist.

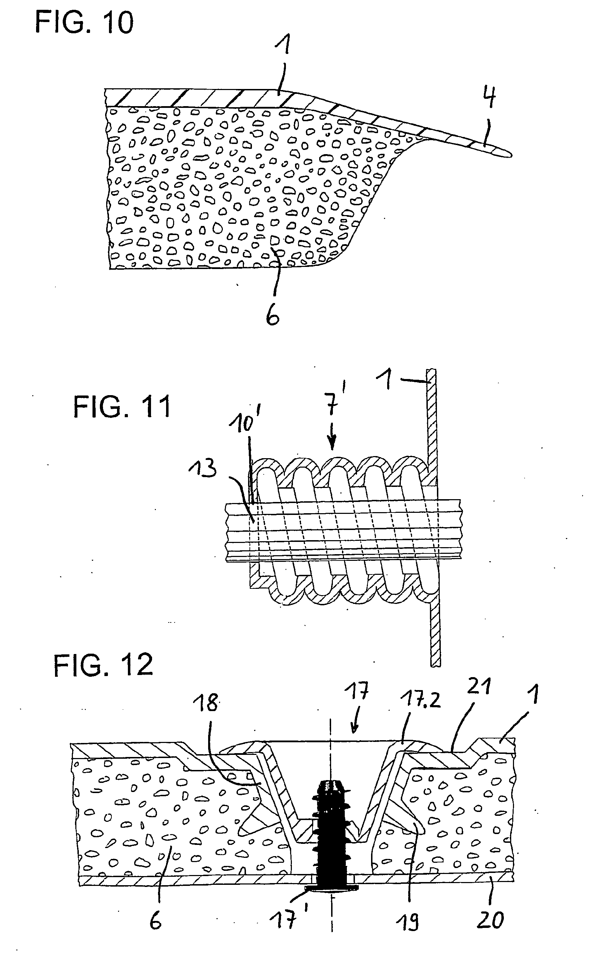

Fig. 10 zeigt eine Schnittansicht des Randbereichs eines erfindungsgemäßen Bauteils mit einer daran ausgebildeten Dichtlippe 4. Der dünnauslaufende Randbereich des Kunststoffformteils 1 ist gegenüber dem angrenzenden Bereich etwas abgewinkelt. Durch die Abwinklung kann eine elastische Anpressung der Dichtlippe 4 an ein benachbartes Bauteil dauerhaft sichergestellt werden. Die zum Beispiel aus Polyurethan-Kaltschaum gebildete Schallabsorberlage 6 endet mit Abstand zum Rand der Dichtlippe 4.

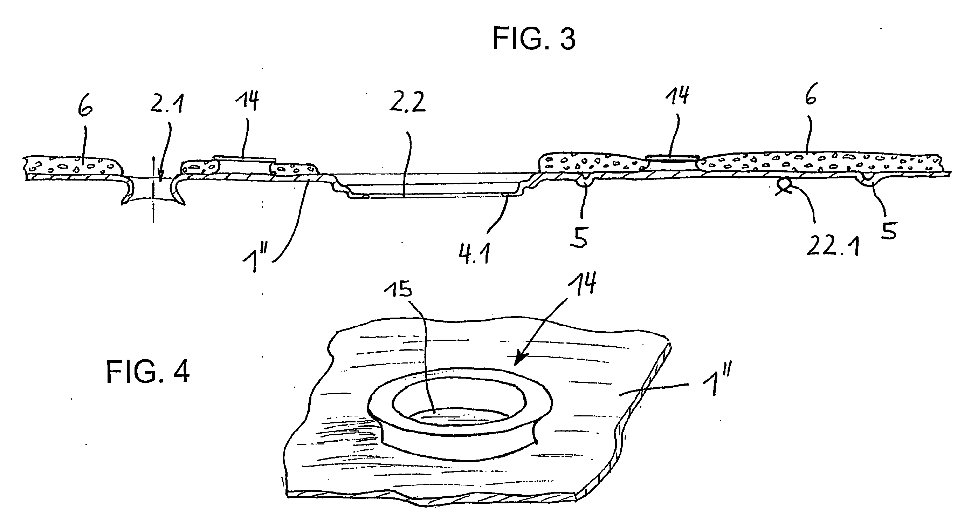

Wie in den Figuren 2 und 3 dargestellt, ist eine entsprechende, elastisch wirkende Dichtlippe 4.1 auch am Rand eines größeren Durchbruchs 2.2 des ungeschäumten Kunststoffformteils 1', 1" ausgebildet. Der in Fig. 3 dargestellte Durchbruch 2.2 kann beispielsweise einem Klimaanlagen-Aggregat (nicht gezeigt) zugeordnet sein.

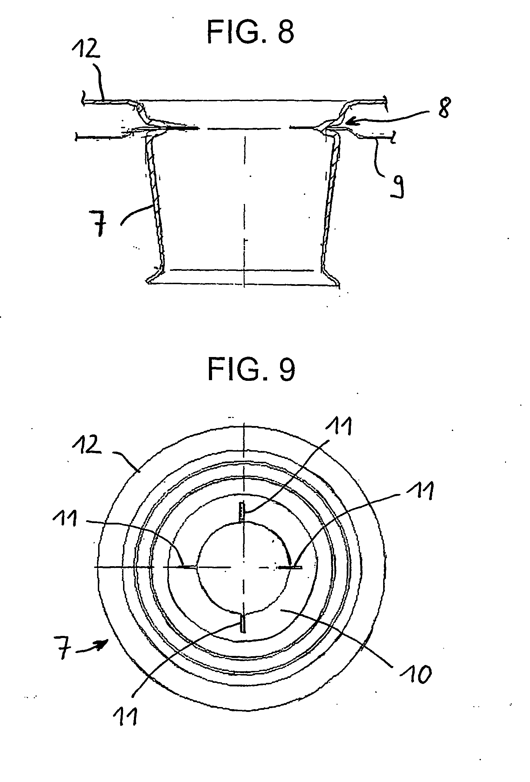

Zur abgedichteten Durchleitung elektrischer Kabel, einer Lenkstange oder ähnlichen strangartigen Elementen ist das Kunststoffformteil 1, 1', 1" mit tüllenförmigen oder federbalgförmigen Kabel- bzw. Stangendurchführungen versehen. Das in Fig. 2 dargestellte Kunststoffformteil 1" weist eine daran einstückig angeformte Tülle 7 auf. In den Figuren 8 und 9 ist eine derartige Kabel- und Stangendurchführung genauer dargestellt. Die Tülle 7 ist doppeltkonisch ausgebildet und elastisch aufweitbar. Sie weist eine umlaufende Einschnürung 8 auf, mittels der die Tülle 7 und damit das Kunststoffformteil 1" an einem entsprechenden Durchbruch einer Stirnwand bzw. Blechwand 9 fixiert werden kann. In der Ebene der Einschnürung 8 weist die Tülle 7 innenseitig eine durchbrochene Membran 10 auf. Es ist zu erkennen, dass die kreisringförmige Membran 10 von ihrem Innenrand ausgehend geschlitzt ist, wobei vier Schlitze 11 über den Umfang der Membran 10 gleichmäßig verteilt angeordnet sind. Bei der Tülle 7 und ihrem flanschartigen Abschnitt 12 handelt es sich um ein während des Spritzgießens, Spritzprägens oder Spritzpressens des Kunststoffformteils 1', 1" hergestelltes Element, das somit einteilig mit dem Rest des Kunststoffformteils ausgebildet ist.

Eine alternative Ausführungsform einer Kabel- bzw. Stangendurchführung ist in Fig. 11 dargestellt. Das Kunststoffformteil 1 ist hier mit einer flexiblen, federbalgartigen Tülle 7' versehen. Die Tülle 7' ist an dem Kunststoffformteil 1 wiederum einstückig angeformt. Ihre Form entspricht derjenigen eines wendelförmig ausgebildeten Wellschlauches. An ihrer Stirnseite weist sie eine elastische, durchbrochene Membran 10' auf, die einen Kabelstrang 13 oder dergleichen dichtend umschließt.

Wie insbesondere in Fig. 3 dargestellt, ist das ungeschäumte Kunststoffformteil 1, 1" vorzugsweise mit einer Schallabsorberlage 6, beispielsweise einem offenporigen Schaumstoff oder Vliesstoff versehen. Hinsichtlich eines sortenreinen Recyclings ist das Kunststoffformteil 1, 1" vorzugsweise trennbar mit dem Schaumstoff bzw. Vliesstoff verbunden. Auf eine großflächige stoffschlüssige Verbindung, z.B. in Form einer Verklebung, wird somit verzichtet. Die trennbare Verbindung von Kunststoffformteil 1, 1" und Vliesstoff bzw. Schaumstoff kann beispielsweise durch Klipsverbindungen, Nietverbindungen, partielle Keilverbindungen, partielle Klebeverbindungen oder partielle Schweißverbindungen realisiert sein.

Fig. 3 zeigt eine Stirnwandverkleidung mit einer daran partiell befestigten Schallabsorberlage 6. Zur Befestigung der Schallabsorberlage 6 dienen domartige Ausprägungen 14 des Kunststoffformteils 1". Die Ausprägungen 14 sind jeweils ringförmig ausgebildet und weisen einen Hinterschnitt auf, an dem die Schallabsorberlage 6 formschlüssig gehalten ist (vgl. Fig. 4). Die Schallabsorberlage 6 kann insbesondere aus einem Polyurethan-Kaltschaum bestehen, der sich mit der Oberfläche des Kunststoffformteils 1" lösbar haftend, jedoch nicht fest verbindet. Das Kunststoffformteil 1" wird mit dem Schaumstoff hinterschäumt, der mit den Ausprägungen 14 eine formschlüssige Verbindung eingeht. Die Ausprägungen 14 können mit einem zugehörigen Wandabschnitt 15 als vorgefertigte Komponenten ebenso wie die tüllenförmigen Kabel- und Leitungsdurchführungen 7, 7" in einer Gießform mit dem Material des Kunststoffformteils 1" umspritzt bzw. stoffschlüssig verbunden werden. Es liegt auch im Rahmen der Erfindung, den Wandbereich 15 innerhalb der ringförmigen Ausprägung 14 als geschlitzte Dichtungsmembran auszubilden (vgl. Fig. 9).

Die Befestigung des erfindungsgemäßen Bauteils an Karosserieteilen erfolgt beispielsweise mittels Bolzen. Wie in Fig. 3 gezeigt, kann das Kunststoffformteil 1" hierzu konisch oder zylindrisch ausgebildete Durchbrechungen 2.1 als Bolzenführungen aufweisen. Eine konische Ausführung der Durchbrechungen 2.1 erleichtert das Einsetzen der Bolzen, was bei der Montage in der Regel ohne Sicht auf die Verbindungsstelle zu leisten ist.

In Fig. 12 ist ein Abschnitt eines erfindungsgemäßen Kunststoffformteils 1 mit angeschäumter Schallabsorberlage 6 und lösbarem Befestigungselement 17 dargestellt. An dem Kunststoffformteil 1 ist ein Durchbruch mit einer gegenüber einer Grundschicht vorstehenden Stutzen 18 ausgebildet. Der Stutzen 18 ist einstückig an der Grundschicht ausgeformt. Er ist konisch geformt und weist einen einen Hinterschnitt bildenden Kragen 19 auf. Die Schallabsorberlage 6 ist mit dem Kragen 19 formschlüssig verbunden. Das aus Kunststoffformteil 1 und Schallabsorberlage bestehende Bauteil ist an einer Stirnwand oder Platte 20 befestigt. Als Befestigungselement dient ein Schraubbolzen 17.1 mit einem hutförmigen Sicherungskörper 17.2. Anstelle eines Schraubbolzens 17.1 kann auch ein Rastbolzen verwendet werden. In der Grundschicht ist ein Absatz 21 ausgebildet, so dass der flanschförmige Abschnitt des Sicherungskörpers 17.2 in der Grundschicht versenkt ist.

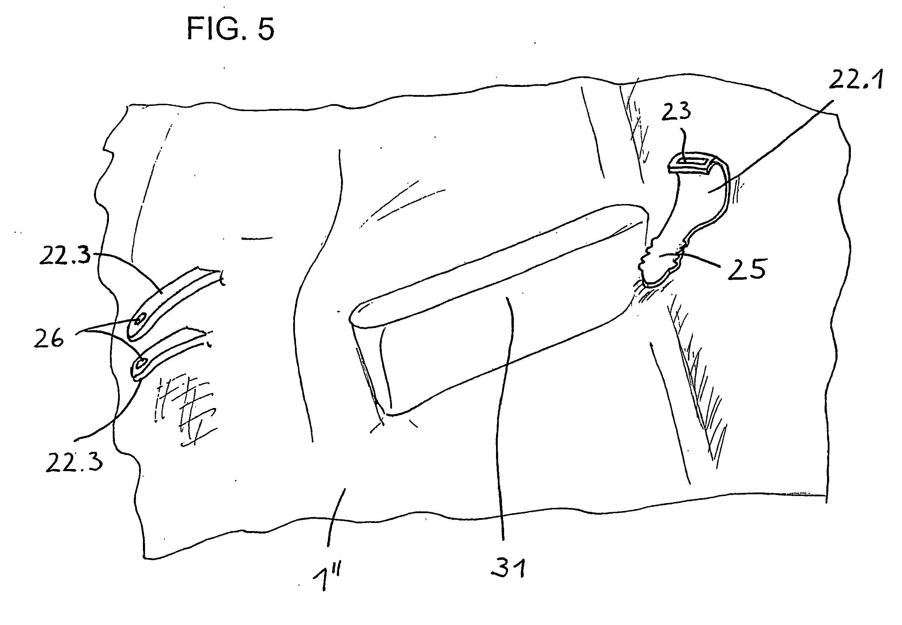

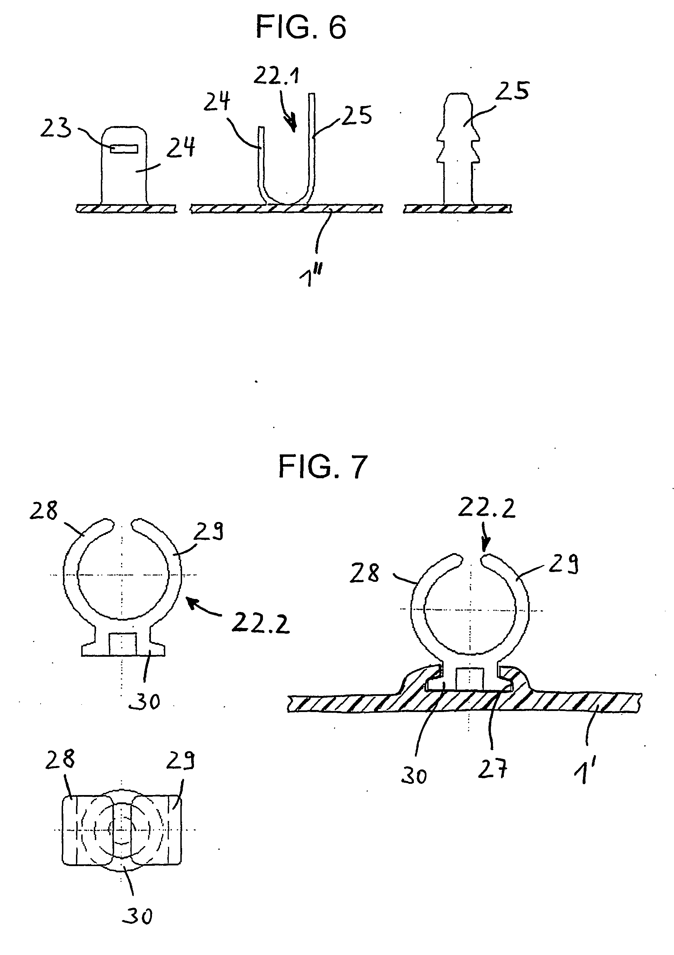

Wie in den Figuren 2, 3, 5, 6 und 7 gezeigt, weist das Kunststoffformteil 1', 1" ferner ein oder mehrere Fixierelemente 22.1, 22.2, 22.3 zur Fixierung eines Kabels oder einer Leitung auf. Die Fixierelemente 22.1 sind an dem Kunststoffformteil 1" einstückig angeformt. In den Figuren 5 und 6 sind Fixierelemente 22.1 dargestellt, die entsprechend Kabelbindern gestaltet sind. Die laschenförmigen Fixierelemente 22.1 weisen einen mit einem Schlitz 23 versehenen Abschnitt 24 und einen mit dem Schlitz 23 verrastbaren Einsteckabschnitt 25 auf. Die Fig. 6 umfasst drei verschiedene Seitenansichten des Fixierelements 22.1.

Alternativ oder ergänzend können an dem Kunststoffformteil 1" auch zungenförmige Fixierelemente 22.3 einstückig angeformt sein, die jeweils mit Löchern 26 zum Durchziehen eines Kabelbinders versehen sind. An dem Kunststoffformteil 1" ist darüber hinaus eine Auskragung 31 einstückig angeformt, die der Abstützung von Kabeln und/oder Schlauchleitungen dient (Fig. 5).

Fig. 7 zeigt ein Fixierelement 22.2 zur Befestigung eines Kabels oder einer Schlauchleitung, das in eine hinterschnittene Nut 27 eines erfindungsgemäßen Kunststoffformteils 1' formschlüssig einsetzbar ist. Die Fig. 7 umfasst eine Draufsicht und zwei Seitenansichten des Fixierelements 22.2. Das Fixierelement 22.2 besteht aus Kunststoff und weist einen mehr als 270° umspannenden Klammerabschnitt mit zwei elastisch auseinander spreizbaren Schenkeln 28, 29 auf. Das Fixierelement hat einen kreisrunden Fußabschnitt 30, so dass es in der Nut 27 des Kunststoffformteils 1' drehbar ist.

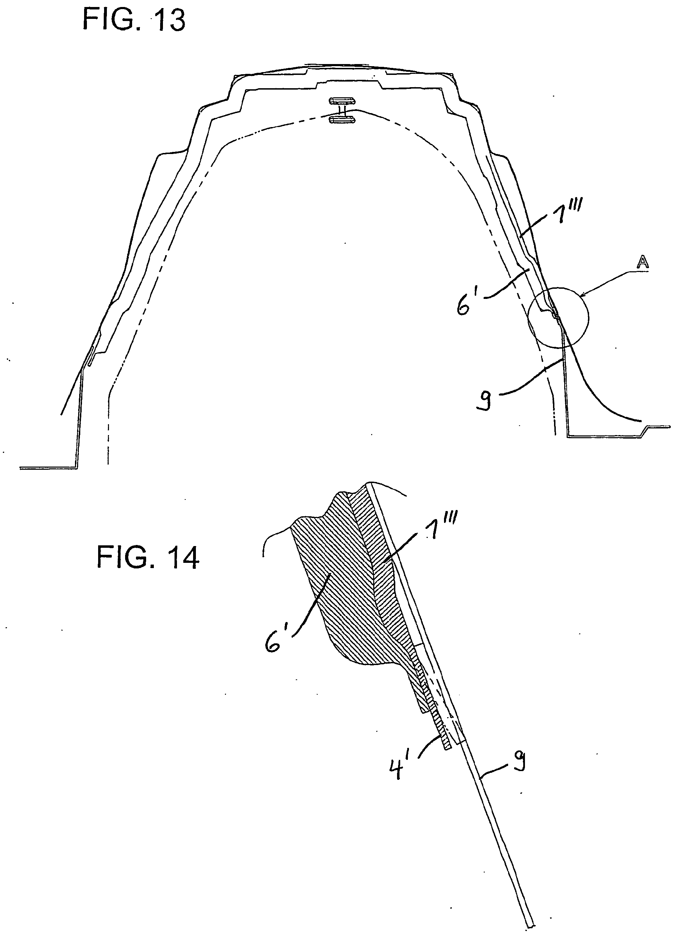

Aus den Kunststoffmischungen gemäß den oben beschriebenen Beispielen lassen sich neben schalldämmenden Formteilen zur Verkleidung einer Karosseriestimwand auch vorteilhafte Getriebetunnelabdeckungen herstellen. Die Getriebetunnelabdeckung gemäß den Figuren 13 und 14 besteht aus einem entsprechenden Kunststoffformteil 1"' und einer Schallabsorberlage 6'. Die Schallabsorberlage 6' ist beispielsweise aus offenporigen Schaumstoff und/oder Vliesstoff gebildet. Es ist zu erkennen, dass das Kunststoffformteil 1"' wiederum einen dünnauslaufenden Rand 4' aufweist, der als Dichtlippe dient. In Fig. 14 ist durch die gestrichelten Linien angedeutet, dass der Rand des Kunststoffformteils 1"' etwas nach außen abgewinkelt ist, so dass er im montierten Zustand der Getriebetunnelabdeckung elastisch dichtend am Karosserieblech 9 anliegt. Das schalldämmende Kunststoffformteil 1"' ist mit der Schallabsorberlage 6' trennbar verbunden. Die trennbare Verbindung kann insbesondere durch partielle Schweißpunkte realisiert sein.

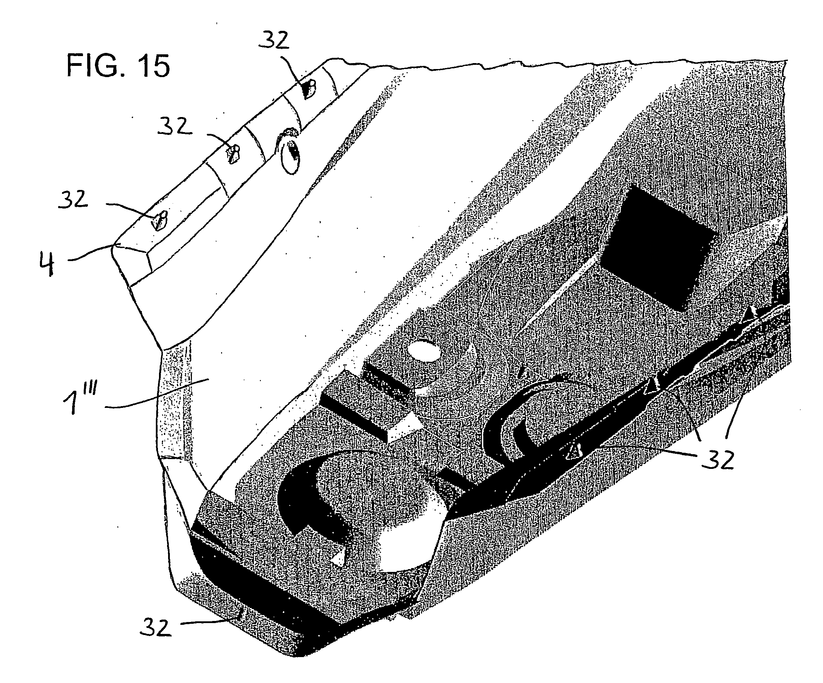

In Fig. 15 ist ein als Getriebetunnelabdeckung dienendes Kunststoffformteil 1"' gezeigt. An der Innenseite des dünnauslaufenden Randes 4 sind mehrere stift- oder domförmige Vorsprünge 32 ausgeformt. Der Durchmesser der Vorsprünge 32 verjüngt sich von ihrer Basis in Richtung ihrer Spitze.

Das Kunststoffformteil 1"' wird innenseitig mit einer Schallabsorberlage versehen (in Fig. 15 nicht gezeigt). Dies kann z.B. in der Weise erfolgen, dass das Kunststoffformteil 1"' mit Polyurethan-Kaltschaum hinterschäumt wird, wobei der Kaltschaum die Vorsprünge 32 bis auf einen bestimmten Endbereich der jeweiligen Spitze umschließt. Die Spitzen der Vorsprünge 32 stehen somit etwas über die Schallabsorberlage vor. Anschließend werden die Spitzen der Vorsprünge 32 mittels einer Schweißvorrichtung umgeformt, so dass die Vorsprünge durchmessererweiterte Köpfe erhalten, die die Schallabsorberlage am Kunststoffformteil 1"' sichern. Auf diese Weise wird eine partielle, lösbare Verbindung von Kunststoffformteil 1"' und Schallabsorberlage erreicht. Die umgeformten Vorsprünge 32 ähneln dann einer Nietverbindung, wobei die Schallabsorberlage - sofern erforderlich - aufgrund ihrer elastischen Verformbarkeit von den Vorsprüngen einfach abgetrennt bzw. abgerissen werden kann.

Alternativ ist es auch möglich, eine vorgefertigte Schallabsorberlage zu verwenden, die den Vorsprüngen 32 des Kunststoffformteils 1"' zugeordnete Durchbrüche aufweist. Die Größe dieser Durchbrüche entspricht in etwa dem Durchmesser der Vorsprünge 32, deren Spitzen nach Durchdringen der Durchbrüche wie oben beschrieben zu durchmessererweiterten Köpfen umgeformt werden.

Bei den in den Figuren 3, 10, 12 und 14 dargestellten Ausführungsbeispielen ist das schalldämmende Kunststoffformteil 1, 1 ", 1"' einlagig ausgebildet. Wie in den Figuren 16 bis 18 dargestellt, liegt es jedoch auch im Rahmen der Erfindung, das Kunststoffformteil 1 aus mehreren thermoplastischen Elastomerlagen 1.1 bis 1.3 auf Basis von Styrol und Füllstoff aufzubauen, wobei die Elastomerlagen 1.1 bis 1.3 dann insbesondere unterschiedlich hart ausgebildet werden können und/oder eine (1.3) der Elastomerlagen eine Schaumstruktur aufweist. Bei dem in Fig. 17 dargestellten Ausführungsbeispiel ist das Kunststoffformteil 1 aus drei thermoplastischen Elastomerlagen 1.1 bis 1.3 aufgebaut, wobei eine relativ weiche Kernlage 1.2 zwischen zwei demgegenüber härteren Außenlagen 1.1, 1.3 angeordnet ist.

Gemäß Fig. 18 kann eine (1.2) der Elastomerlagen unterschiedliche dicke Lagenabschnitte 33 aufweisen, um örtlich gezielt unterschiedliche Biegesteifigkeiten und/oder unterschiedliche Schalldämmeigenschaften zu schaffen.

Bei dem in Fig. 19 dargestellten Ausführungsbeispiel weist das schalldämmende Kunststoffformteil 1 mehrere daran einstückig angeformte Abstandsrippen 34 auf. Das Kunststoffformteil kann mit solchen Abstandsrippen 34 an einem abzudeckenden Karosserieblech (nicht gezeigt) anliegen. Vorzugsweise liegt eine aus Vliesstoff und/oder offenporigem Schaumstoff gebildete Schallabsorberlage 6 an den Abstandsrippen 34 an. Zwischen dem Kunststoffformteil 1 und der Schallabsorberlage 6 ergeben sich somit Hohlräume 35, die akustisch wirksame Schallimpedanzsprünge darstellen.

## Patentansprüche

1. Schallisolierendes Bauteil für Kraftfahrzeuge, insbesondere in Form einer Getriebetunnel- und/oder Stirnwandverkleidung, gebildet aus mindestens einem Kunststoffformteil (1, 1', 1", 1"') aus thermoplastischem Elastomer auf Basis von Styrol oder Butadien-Styrol,
bei dem der zur Herstellung verwendete Kunststoff eine Mischung aus
| | |
|---|---|
| 5 bis 15 Gew.-% | eines Copolymers auf Basis von Butadien-Styrol, eines Copolymers auf Basis von gebundenem Styrol und Ethylen-Butylen oder eines Copolymers auf Basis von gebundenem Styrol und Ethylen-Butylen in Kombination mit einem Block-Copolymer auf Basis von gebundenem Styrol und Butadien, |
| 2 bis 15 Gew.-% | eines Polypropylen-Homopolymers und/oder eines Vinyl-Acetat-Copolymers, |
| mindestens 60 Gew.-% | eines Füllstoffs, wobei der Kunststoff mindestens 30 Gew.-% Magnetit als Füllstoff beinhaltet, und |
| bis zu 23 Gew.-% | Additiven ist. |

2. Bauteil nach Anspruch 1,
**dadurch gekennzeichnet, dass** der Kunststoff mindestens 70 Gew.-% Füllstoff beinhaltet.

3. Bauteil nach Anspruch 1 oder 2,
**dadurch gekennzeichnet, dass** der als Füllstoff verwendete Magnetit eine mittlere Korngröße von etwa 10 µm besitzt.

4. Bauteil nach einem der Ansprüche 1 bis 3,
**dadurch gekennzeichnet, dass** der Kunststoff 5 bis 15 Gew.-% eines Copolymers auf Basis von gebundenem Styrol und Ethylen-Butylen beinhaltet, wobei der Anteil des gebundenen Styrols an diesem Copolymer im Bereich von 30 und 34 % liegt.

5. Bauteil nach einem der Ansprüche 1 bis 4,
**dadurch gekennzeichnet, dass** der Kunststoff in Ergänzung zu 3 bis 12 Gew.-% eines Copolymers auf Basis von gebundenem Styrol und Ethylen-Butylen zwischen 2 bis 10 Gew.-% eines Block-Copolymers auf Basis von gebundenem Styrol und Butadien beinhaltet, wobei die Anteile des Styrols an diesen Polymeren jeweils im Bereich von 30 und 32 % liegen.

6. Bauteil nach einem der Ansprüche 1 bis 5,
**dadurch gekennzeichnet, dass** der Kunststoff 2 bis 8 Gew.-% eines Polypropylen-Homopolymers beinhaltet.

7. Bauteil nach einem der Ansprüche 1 bis 6,
**dadurch gekennzeichnet, dass** der Kunststoff bis zu 12 Gew.-% eines Vinyl-Acetat-Copolymers beinhaltet.

8. Bauteil nach einem der Ansprüche 1 bis 7,
**dadurch gekennzeichnet, dass** der Füllstoff neben Magnetit zusätzlich gemahlenes Calciumcarbonat, gemahlenes, natürliches Bariumsulfat und/oder gefälltes Bariumsulfat beinhaltet.

9. Bauteil nach einem der Ansprüche 1 bis 8,
**dadurch gekennzeichnet, dass** der Kunststoff Hohlglasteilchen, Keramikteilchen, Blähtonteilchen und/oder Glasfasern als Füllstoff beinhaltet.

10. Bauteil nach einem der Ansprüche 1 bis 9,
**dadurch gekennzeichnet, dass** der Kunststoff Muskovit-Glimmer, Phlogopit-Glimmer, expandierten Graphit und/oder fibrilierte Zellulosefasern als Füllstoff beinhaltet.

11. Bauteil nach einem der Ansprüche 1 bis 10,
**dadurch gekennzeichnet, dass** der Kunststoff bis zu 0,5 Gew.-% eines Epoxidharzes beinhaltet.

12. Bauteil nach einem der Ansprüche 1 bis 11,
**dadurch gekennzeichnet, dass** der Kunststoff 8 bis 20 Gew.-% Verarbeitungsöl, vorzugsweise technisches oder medizinisches Weißöl als Weichmacher enthält.

13. Bauteil nach einem der Ansprüche 1 bis 12,
**dadurch gekennzeichnet, dass** es durch Spritzgießen, Spritzprägen, Niederdruck-Spritzgießen oder Extrudieren hergestellt ist.

14. Bauteil nach einem der Ansprüche 1 bis 13,
**dadurch gekennzeichnet, dass** es durch Tiefziehen umgeformt ist.

15. Bauteil nach einem der Ansprüche 1 bis 14,
**dadurch gekennzeichnet, dass** das Kunststoffformteil (1,1', 1", 1'") ganzflächig oder partiell mit Vliesstoff und/oder Schaumstoff (6) bedeckt ist.

16. Bauteil nach Anspruch 15,
**dadurch gekennzeichnet, dass** das Kunststoffformteil (1, 1', 1", 1'") mit dem Vliesstoff und/oder Schaumstoff (6) trennbar verbunden ist.

17. Bauteil nach Anspruch 15 oder 16,
**dadurch gekennzeichnet, dass** das Kunststoffformteil (1, 1', 1", 1"') mit dem Vliesstoff und/oder Schaumstoff (6) durch Klipsverbindungen, Nietverbindungen, partielle Keilverbindungen, partielle Klebeverbindungen oder partielle Schweißverbindungen trennbar verbunden ist.

18. Bauteil nach einem der Ansprüche 1 bis 17,
**dadurch gekennzeichnet, dass** an dem Kunststoffformteil mindestens eine Dichtlippe (4, 4.1), eine Tülle (7, 7') und/oder eine geschlitzte Dichtungsmembran (10) ausgebildet ist.

19. Bauteil nach einem der Ansprüche 1 bis 18,
**dadurch gekennzeichnet, dass** an dem Kunststoffformteil (1,1', 1", 1'") Bereiche unterschiedlicher Wanddicke und/oder Materialdichte ausgebildet sind.

20. Bauteil nach einem der Ansprüche 1 bis 19,
**dadurch gekennzeichnet, dass** das Kunststoffformteil (1,1', 1", 1'") ein oder mehrere daran einstückig angeformte Versteifungselemente (5) aufweist.

21. Bauteil nach einem der Ansprüche 1 bis 20,
**dadurch gekennzeichnet, dass** das Kunststoffformteil (1, 1', 1", 1 "') ein oder mehrere daran einstückig angeformte Abstandsrippen (34) aufweist.

22. Bauteil nach Anspruch 21 und einem der Ansprüche 15 bis 17,
**dadurch gekennzeichnet, dass** der Vliesstoff und/oder Schaumstoff an den Abstandsrippen (34) anliegt.

23. Bauteil nach einem der Ansprüche 1 bis 22,
**dadurch gekennzeichnet, dass** das Kunststoffformteil (1, 1', 1 ", 1"') mindestens eine daran einstückig angeformte Kabel- oder Leitungsführung aufweist.

24. Bauteil nach einem der Ansprüche 1 bis 23,
**dadurch gekennzeichnet, dass** das Kunststoffformteil (1,1', 1", 1'") mindestens ein daran einstückig angeformtes Fixierelement (22.1, 22.2, 22.3) zur Fixierung eines Kabels oder einer Leitung aufweist.

25. Bauteil nach einem der Ansprüche 1 bis 24,
**dadurch gekennzeichnet, dass** an dem Kunststoffformteil mindestens ein Versteifungselement (5) und/oder Fixierelement (22.1, 22.2, 22.3) zur Fixierung eines Kabels oder einer Leitung, oder mindestens eine Abstandsrippe (34) und/oder eine Kabel- oder Leitungsführung (7, 7') einstückig angeformt sind, wobei das Versteifungselement (5), Fixierelement (22.1, 22.2, 22.3), die Abstandsrippe (34) oder die Kabel- oder Leitungsführung (7, 7') aus einem härteren Kunststoff gebildet ist als das übrige Kunststoffformteil (1, 1', 1 ") oder als Abschnitte des Kunststoffformteils.

26. Bauteil nach einem der Ansprüche 1 bis 25,
**dadurch gekennzeichnet, dass** das Kunststoffformteil (1") konisch oder zylindrisch ausgebildete Durchbrechungen (2.1) als Bolzenführungen aufweist.

27. Bauteil nach einem der Ansprüche 1 bis 26,
**dadurch gekennzeichnet, dass** das Kunststoffformteil (1) aus mehreren thermoplastischen Elastomerlagen (1.1, 1.2, 1.3) aufgebaut ist.

28. Bauteil nach Anspruch 27,
**dadurch gekennzeichnet, dass** die Elastomerlagen (1.1, 1.2, 1.3) unterschiedlich hart ausgebildet sind.

29. Bauteil nach Anspruch 27 oder 28,
**dadurch gekennzeichnet, dass** eine der Elastomerlagen (1.1, 1.2, 1.3) eine Schaumstruktur aufweist.

30. Bauteil nach einem der Ansprüche 1 bis 29,
**dadurch gekennzeichnet, dass** das Kunststoffformteil aus mindestens drei thermoplastischen Elastomerlagen (1.1, 1.2, 1.3) aufgebaut ist, wobei eine relativ weiche Kernlage (1.2) zwischen zwei demgegenüber härteren Außenlagen (1.1, 1.3) angeordnet ist.

31. Bauteil nach einem der Ansprüche 1 bis 28,
**dadurch gekennzeichnet, dass** das Kunststoffformteil (1.1', 1", 1'") ein ungeschäumtes Kunststoffformteil ist und/oder eine Materialdichte im Bereich von 1,5 und 2,5 g/cm³ aufweist.

## Claims

1. A soundproofing component for motor vehicles, in particular in the form of a gearbox tunnel and/or dashboard covering, composed of at least one plastic molded part (1, 1', 1", 1"') made of a styrene or butadiene styrene-based thermoplastic elastomer,
with the plastic used for the production comprising a mixture of
5 to 15 weight % of a butadiene styrene-based copolymer, a bonded styrene and ethylene butylene-based copolymer or a bonded styrene and ethylene butylene-based copolymer in combination with a bonded styrene and butadiene-based block copolymer,
2 to 15 weight % of a polypropylene homopolymer and/or a vinyl acetate copolymer,
at least 60 weight % of a filler, wherein the plastic contains at least 30 weight % of magnetite as filler, and up to 23 weight % additives.

2. The component according to claim 1,
**characterized in that** the plastic comprises at least 70 weight % of filler.

3. The component according to claim 1 or 2,
**characterized in that** the magnetite used as a filler has an average grain size of approximately 10 µm.

4. The component according to one of claims 1 to 3,
**characterized in that** the plastic contains 5 to 15 weight % of a bonded styrene and ethylene butylene-based copolymer, wherein the portion of the bonded styrene at this copolymer is in the range of between 30 and 34%.

5. The component according to one of claims 1 to 4,
**characterized in that,** in addiction to 3 to 12 weight % of a bonded styrene and ethylene butylene-based copolymer, the plastic contains between 2 and 10 weight % of a bonded styrene and butadiene-based block copolymer, wherein the portions of the styrene at these polymers are in the range of between 30 and 32% in each case.

6. The component according to one of claims 1 to 5,
**characterized in that** the plastic contains 2 to 8 weight % of a polypropylene homopolymer.

7. The component according to one of claims 1 to 6,
**characterized in that** the plastic contains up to 12 weight % of a vinyl acetate copolymer.

8. The component according to one of claims 1 to 7,
**characterized in that,** in addiction to magnetite, the filler also contains ground calcium carbonate, ground natural barium sulfate and/or precipitated barium sulfate.

9. The component according to one of claims 1 to 8,
**characterized in that** the plastic contains hollow glass particles, ceramic particles, expanded clay particles and/or fiber glass as filler.

10. The component according to one of claims 1 to 9,
**characterized in that** the plastic contains muscovite mica, phlogopite mica, expanded graphite and/or fibrillated cellulose fibers as filler.

11. The component according to one of claims 1 to 10,
**characterized in that** the plastic contains up to 0.5 weight % of an epoxy resin.

12. The component according to one of claims 1 to 11,
**characterized in that** the plastic contains 8 to 20 weight % of processing oil, preferably technical or medical white oil as softener.

13. The component according to one of claims 1 to 12,
**characterized in that** it is made by means of injection molding, injection embossing, low-pressure injection molding or extrusion.

14. The component according to one of claims 1 to 13,
**characterized in that** it is deformed by means of deep drawing.

15. The component according to one of claims 1 to 14,
**characterized in that** the plastic molded part (1, 1', 1", 1'") is entirely or partially covered with a non-woven fabric and/or a foamed material (6).

16. The component according to claim 15,
**characterized in that** the plastic molded part (1, 1', 1", 1"') is connected to the non-woven fabric and/or foamed material (6) so as to be capable of being separated.

17. The component according to claim 15 or 16,
**characterized in that** the plastic molded part (1, 1', 1", 1'") is connected to the non-woven fabric and/or foamed material (6) by means of clip connections, rivet connections, partial wedge connections, partial adhesive connections or partial welded connections so as to be capable of being separated.

18. The component according to one of claims 1 to 17,
**characterized in that** at least one sealing 1ip (4, 4.1), a grommet (7, 7') and/or a slotted sealing membrane (10) are embodied on the plastic molded part.

19. The component according to one of claims 1 to 18,
**characterized in that** areas having a different wall thickness and/or material density are embodied on the plastic molded part (1, 1', 1", 1'").

20. The component according to one of claims 1 to 19,
**characterized in that** the plastic molded part (1, 1', 1", 1'") comprises one or a plurality of reinforcement elements (5), which are integrally molded thereon.

21. The component according to one of claims 1 to 20,
**characterized in that** the plastic molded part (1, 1', 1", 1'") comprises one or a plurality of spacer ribs (34), which are integrally molded thereon.

22. The component according to claim 21 and according to one of claims 15 to 17,
**characterized in that** the non-woven fabric and/or foamed material rests against the spacer ribs (34).

23. The component according to one of claims 1 to 22,
**characterized in that** that the plastic molded part (1, 1', 1", 1'") comprises at least one cable or line guide, which is integrally molded thereon.

24. The component according to one of claims 1 to 23,
**characterized in that** the plastic molded part (1, 1', 1", 1'") comprises at least one fixing element (22.1, 22.2, 22.3), which is integrally molded thereon for fixing a cable or a line.

25. The component according to one of claims 1 to 24,
**characterized in that** at least one reinforcement element (5) and/or fixing element (22.1, 22.2, 22.3) for fixing a cable or a line, or at least one spacer rib (34) and/or a cable or line guide (7, 7') are integrally molded on the plastic molded part, wherein the reinforcement element (5), fixing element (22.1, 22.2, 22.3), the spacer rib (34) or the cable or line guide (7, 7') are composed of a plastic, which is harder than the remaining plastic molded part (1, 1', 1", 1'") or than sections of the plastic molded part.

26. The component according to one of claims 1 to 25,
**characterized in that** the plastic molded part (1") comprises conically or cylindrically embodied through holes (2.1) as pin guides.

27. The component according to one of claims 1 to 26,
**characterized in that** the plastic molded part (1) is composed of a plurality of thermoplastic elastomer layers (1.1, 1.2, 1.3).

28. The component according to claim 27,
**characterized in that** the elastomer layers (1.1, 1.2, 1.3) are designed to have a different hardness.

29. The component according to claim 27 or 28,
**characterized in that** one of the elastomer layers (1.1, 1.2, 1.3) comprises a foam structure.

30. The component according to one of claims 1 to 29,
**characterized in that** the plastic molded part is configured from at least three thermoplastic elastomer layers (1.1, 1.2, 1.3), wherein a relatively soft core layer (1.2) is arranged between two outer layers (1.1, 1.3), which are harder compared thereto.

31. The component according to one of claims 1 to 28,
**characterized in that** the plastic molded part (1, 1', 1", 1'") is an unfoamed plastic molded part and/or comprises a material density in the range of from 1.5 to 2.5 g/cm³.

## Revendications

1. Composant acoustiquement isolant pour véhicules automobiles, qui présente en particulier la forme d'un rhabillage de tunnel de transmission et/ou de paroi latérale, formé d'au moins une pièce moulée (1, 1', 1", 1"') en élastomère thermoplastique à base de styrène ou de butadiène-styrène,
dans lequel la matière synthétique utilisée pour la fabrication est un mélangé constitué de
| | |
|---|---|
| 5 à 15 % en poids | d'un copolymère à base de butadiène et de styrène, d'un copolymère à base de styrène lié et d'éthylène-butylène ou d'un copolymère à base de styrène lié et d'éthylène-butylène combiné avec un copolymère séquencé à base de styrène lié et de butadiène, |
| 2 à 15 % en poids | d'un homopolymère de propylène et/ou d'un copolymère d'acétate de vinyle, |
| au moins 60 % en poids | d'une charge, la matière synthétique contenant au moins 30 % en poids de magnétite comme charge et |
| jusque 23 % en poids | d'additifs. |

2. Composant selon la revendication 1, **caractérisé en ce que** la matière synthétique contient au moins 70 % en poids de charge.

3. Composant selon les revendications 1 ou 2, **caractérisé en ce que** la magnétite utilisée comme charge présente une granulométrie moyenne d'environ 10 µm.

4. Composant selon l'une des revendications 1 à 3, **caractérisé en ce que** la matière synthétique contient de 5 à 15 % en poids d'un copolymère à base de styrène lié et d'éthylène-butylène, la teneur en styrène lié dans ce copolymère étant comprise dans la plage de 30 à 34 %.

5. Composant selon l'une des revendications 1 à 4, **caractérisé en ce que** la matière synthétique contient en complément de 3 à 12 % en poids d'un copolymère à base de styrène lié et d'éthylène-butylène, entre 2 et 10 % en poids d'un copolymère séquencé à base de styrène lié et de butadiène, la teneur en styrène de chacun de ces polymères étant comprise dans la plage de 30 à 32 %.

6. Composant selon l'une des revendications 1 à 5, **caractérisé en ce que** la matière synthétique contient de 2 à 8 % en poids d'un homopolymère de polypropylène.

7. Composant selon l'une des revendications 1 à 6, **caractérisé en ce que** la matière synthétique contient jusque 12 % en poids d'un copolymère d'acétate de vinyle.

8. Composant selon l'une des revendications 1 à 7, **caractérisé en ce que** la charge contient en plus de la magnétite, du carbonate de calcium broyé, du sulfate de baryum naturel broyé et/ou du sulfate de baryum précipité.

9. Composant selon l'une des revendications 1 à 8, **caractérisé en ce que** la matière synthétique contient comme charge des particules de verre creux, des particules de céramique, des particules d'argile soufflées et/ou des fibres de verre.

10. Composant selon l'une des revendications 1 à 9, **caractérisé en ce que** la matière synthétique contient comme charge du mica de muscovite, du mica de phlogopite, du graphite expansé et/ou des fibres de cellulose fibrillés.

11. Composant selon l'une des revendications 1 à 10, **caractérisé en ce que** la matière synthétique contient jusque 0,5 % en poids d'une résine époxy.

12. Composant selon l'une des revendications 1 à 11, **caractérisé en ce que** la matière synthétique contient comme plastifiant de 8 à 20 % en poids d'huile de traitement, de préférence de l'huile blanche de qualité technique ou médicale.

13. Composant selon l'une des revendications 1 à 12, **caractérisé en ce qu'**il est fabriqué par moulage par injection, impression-injection, moulage par injection sous basse pression ou extrusion.

14. Composant selon l'une des revendications 1 à 13, **caractérisé en ce qu'**il est façonné par emboutissage profond.

15. Composant selon l'une des revendications 1 à 14, **caractérisé en ce que** la pièce moulée (1, 1', 1", 1"') en matière synthétique est recouverte sur la totalité ou une partie de sa surface par un tissu de toison et/ou une mousse (6).

16. Composant selon la revendication 15, **caractérisé en ce que** la pièce moulée (1, 1', 1", 1"') en matière synthétique est reliée de manière séparable au tissu de toison et/ou à la mousse (6).

17. Composant selon les revendications 15 ou 16, **caractérisé en ce que** la pièce moulée (1, 1', 1", 1"') en matière synthétique est reliée de manière libérable au tissu de toison et/ou à la mousse (6) par des liaisons à encliquetage élastique, des liaisons rivetées, des liaisons partielles biseautées, des liaisons partielles collées ou des liaisons partielles soudées.

18. Composant selon l'une des revendications 1 à 17, **caractérisé en ce qu'**au moins une lèvre d'étanchéité (4, 4.1), un passe-câble (7, 7') et/ou une membrane d'étanchéité fendue (10) sont formés sur la pièce moulée en matière synthétique.

19. Composant selon l'une des revendications 1 à 18, **caractérisé en ce que** des zones de paroi de différentes épaisseurs et/ou de différentes masses spécifiques sont formées sur la pièce moulée (1, 1', 1", 1"') en matière synthétique.

20. Composant selon l'une des revendications 1 à 19, **caractérisé en ce que** la pièce moulée (1, 1', 1", 1"') en matière synthétique présente un ou plusieurs éléments de renfort (5) qui y sont formés d'un seul tenant.

21. Composant selon l'une des revendications 1 à 20, **caractérisé en ce que** la pièce moulée (1, 1', 1", 1"') en matière synthétique présente une ou plusieurs nervures d'écartement (34) qui y sont formées d'un seul tenant.

22. Composant selon la revendication 21 et l'une des revendications 15 à 17, **caractérisé en ce que** le tissu de toison et/ou la mousse reposent sur les nervures d'écartement (34).

23. Composant selon l'une des revendications 1 à 22, **caractérisé en ce que** la pièce moulée (1, 1', 1", 1"') en matière synthétique présente au moins un guide de câble ou de conducteur qui y est formé d'un seul tenant.

24. Composant selon l'une des revendications 1 à 23, **caractérisé en ce que** la pièce moulée (1, 1', 1", 1"') en matière synthétique présente au moins une élément de fixation (22.1, 22.2, 22.3) qui y est formé d'un seul tenant pour fixer un câble ou une ligne.

25. Composant selon l'une des revendications 1 à 24, **caractérisé en ce qu'**au moins un élément de renfort (5) et/ou un élément de fixation (22.1, 22.2, 22.3) destiné à fixer un câble ou une ligne, au moins une nervure d'écartement (34) et/ou un guide de câble ou de ligne (7, 7') sont formés d'un seul tenant sur la pièce moulée en matière synthétique, l'élément de renfort (5), l'élément de fixation (22.1, 22.2, 22.3), la nervure d'écartement (34) ou le guide de câble ou de ligne (7, 7') étant formés d`une matière synthétique plus dure que le reste de la pièce moulée (1, 1', 1", 1"') en matière synthétique ou que des parties de la pièce moulée en matière synthétique.

26. Composant selon l'une des revendications 1 à 25, **caractérisé en ce que** la pièce moulée (1") en matière synthétique présente des perforations (2.1) de forme conique ou cylindrique et servent de guides de goujon.

27. Composant selon l'une des revendications 1 à 26, **caractérisé en ce que** la pièce moulée (1) en matière synthétique est constituée de plusieurs couches (1.1, 1.2, 1.3) d'élastomère thermoplastique.

28. Composant selon la revendication 27, **caractérisé en ce que** les couches d'élastomère (1.1, 1.2, 1.3) ont des duretés différentes.

29. Composant selon les revendications 27 ou 28, **caractérisé en ce que** l'une des couches d'élastomère (1.1, 1.2, 1.3) présente une structure moussée.

30. Composant selon l'une des revendications 1 à 29, **caractérisé en ce que** la pièce moulée en matière synthétique est constituée d'au moins trois couches (1.1, 1.2, 1.3) d'élastomère thermoplastique, une couche d'âme relativement malléable (1.2) étant disposée entre deux couches extérieures (1.1, 1.3) plus dures qu'elle.

31. Composant selon l'une des revendications 1 à 28, **caractérisé en ce que** la pièce moulée (1, 1', 1", 1"') en matière synthétique est une pièce moulée en matière synthétique non moussée et/ou présente une masse spécifique comprise dans la plage de 1,5 et 2,5 g/cm³.
